# EUROPÄISCHE PATENTANMELDUNG

(11) **EP 4 609 707 A1**
(43) Veröffentlichungstag der Anmeldung: **03.09.2025**
(21) Anmeldenummer: 25161097.8
(22) Anmeldetag: 28.02.2025
(51) Int. Cl.: A01K 11/00, A01K 29/00

(54) **VORRICHTUNG UND SYSTEM ZUR AUTOMATISCHEN VERHALTENSERKENNUNG BESENDETER TIERE**

(30) Priorität: 29.02.2024 DE 102024105874
(71) Anmelder: Forschungsverbund Berlin E.V., 12489 Berlin (DE)
(72) Erfinder: Baer, Jan, 10627 Berlin (DE); Berger, Anne, 13187 Berlin (DE)
(74) Vertreter: Gulde & Partner

(57) **Zusammenfassung**

Die vorliegende Erfindung betrifft eine Vorrichtung zur automatischen Verhaltenserkennung besendeter Tiere umfasst einen Sensor (10) zur Erfassung verhaltensspezifischer Sensordaten eines mit der Vorrichtung (100) verbundenen Tieres (1); einen Prozessor (20) zur Auswertung der vom Sensor (10) erfassten verhaltensspezifischen Sensordaten innerhalb der Vorrichtung (100) zur Ableitung eines den Sensordaten entsprechenden Verhaltens des Tiers (1) auf Grundlage eines zugehörigen sensorspezifischen Verhaltensmodells; und einen Speicher (30) in dem das zugehörige sensorspezifische Verhaltensmodell gespeichert ist, wobei unterschiedliche sensorspezifische Verhaltensmodelle von außerhalb der Vorrichtung (100) wahlweise im Speicher (30) abgelegt werden können, wobei ein passend gewähltes Ausgangsmodell anhand von Trainingsdaten in einem externen Softwareprogramm angelernt werden und anschließend auf die Vorrichtung (100) übertragen werden kann, wobei durch die wahlweise von außerhalb der Vorrichtung (100) im Speicher (30) ablegbaren Verhaltensmodelle vor jeder Verwendung an einem anderen Tier (1) oder mit anderen Sensoren (10) eine Anpassung des sensorspezifischen Verhaltensmodells unabhängig von einer Betriebssoftware oder Firmware der Vorrichtung (100) erfolgen kann.

## Beschreibung

Die vorliegende Erfindung betrifft eine Vorrichtung und ein System zur automatischen Verhaltenserkennung besendeter Tiere und insbesondere eine softwareseitig anpassbare Vorrichtung und ein zughöriges System zur automatischen Verhaltenserkennung bei freilebenden Wildtieren.

### Stand der Technik

Beim Artenschutz und dem Wildtiermanagement geht es vor allem darum, bestimmte Tierarten in ihrem natürlichen Umfeld zu bewahren, zu fördern oder zu regulieren. Dies setzt vertiefte Kenntnisse insbesondere über deren spezifische Lebensräume, typische Verhaltensmuster der Tiere, die Populationsentwicklung in einer Region sowie ein umfassendes Verständnis über den Einfluss der unterschiedlichsten Faktoren auf diese Daten voraus. Forschung zum Verhalten und zu individuellen Bewegungsmustern von Wildtieren (insbesondere von seltenen oder nachtaktiven oder versteckt lebenden Tierarten in weiträumigem oder unzugänglichem Gelände) ist durch direkte Beobachtung nicht immer möglich. Außerdem ist so meist nur die Beobachtung größerer Gruppen, nicht aber von einzelnen Individuen möglich und das natürliche Verhalten der Wildtiere wird durch die Nähe des Menschen oft gestört.

Seit einigen Jahrzehnten wird zur Überwachung und Erforschung von Wildtieren die sogenannte "Wildtier-Telemetrie" (engl. "wildlife telemetry") benutzt. Dabei werden Datenlogger mit zumeist verschiedenen Sensoren an den Tieren angebracht. Die hierfür verwendeten Geräte nutzen meist globale Navigationssatellitensysteme, um die jeweilige Position der Tiere zu bestimmen. Die Positionsdaten können über einen langen Zeitraum gespeichert (engl. "logged") und beispielsweise über eine Mobilfunkverbindung oder eine proprietäre Funkverbindung zu speziellen Empfängern übertragen werden.

Zur Messung der Aktivität der besenderten Tiere dienen in den Datenloggern befindliche Beschleunigungssensoren, die die Beschleunigung in allen drei Raumrichtungen sowie Drehbewegungen (3D/6D-Beschleunigungssensor) erfassen und aufzeichnen. Durch die Aufnahme von solchen Beschleunigungsdaten bei gleichzeitiger Beobachtung des Verhaltens ist es möglich, insbesondere mit Methoden der künstlichen Intelligenz, daraus anschließend entsprechende Modelle zu erstellen, die es ermöglichen, aus später aufgezeichneten Daten auch ohne weitere Beobachtungen das Verhalten des jeweiligen Tieres zu bestimmen.

Bisher ist es üblich, die Sensordaten zunächst vom Datenlogger herunterzuladen und das entsprechende Modell beim Empfänger auf die aufgezeichneten Sensordaten anzuwenden (z. B. Le Roux, Solomon Petrus, et al. "An overview of automatic behaviour classification for animal-borne sensor applications in South Africa." In: Proceedings of the ACM Multimedia 2017 Workshop on South African Academic Participation (2017)). Eine Bestimmung des Verhaltens aus den aufgezeichneten Sensordaten findet somit erst nach einer Erfassung und Übermittlung der Sensordaten statt. Dies hat jedoch den Nachteil, dass eine erhebliche Menge an Daten zu loggen und zu übertragen ist und eine Verhaltensermittlung erst mit einiger Verzögerung erfolgen kann. Zudem steht den Datenloggern trotz eventueller zusätzlicher Solarzellen zur Unterstützung zumeist nur eine begrenzte Menge an Energie zur Verfügung, die bei einer vorhandenen drahtlosen Kommunikationseinrichtungen insbesondere für die Datenübertragung benötigt wird. Daher besteht ein Bedarf an besonders energieeffizient arbeitenden Datenloggern, bei denen die zu übertragende Datenmenge effektiv reduziert werden kann und zudem eine zeitnahe Verhaltenserkennung für eine bedarfsgerechte Auslösung weiterer Sensordatenerfassungen, wie beispielsweise von einer verhaltensabhängig angesteuerten Ortung, ermöglicht wird.

Es gibt bereits erste Ansätze bei denen versucht wurde, für begrenzte Bereiche eine Verhaltenserkennung direkt in einem solchen Datenlogger vorzunehmen (z. B. le Roux, Solomon Petrus, et al. "Reduced energy and memory requirements by on-board behavior classification for animal-borne sensor applications." IEEE Sensors Journal 18.10 (2018); Marais, Jacques, et al. "Automatic classification of sheep behaviour using 3-axis accelerometer data." In: Proceedings of the twenty-fifth annual symposium of the Pattern Recognition Association of South Africa (PRASA) (2014)). Diese Ansätze erfordern bei ihrer praktischen Umsetzung jedoch von den Anwender zumeist ein tiefergehendes Verständnis der technischen Zusammenhänge sowie umfangreiche Programmierkenntnisse, so dass der Kreis möglicher Anwender beschränkt ist. Die Notwendigkeit von Anpassungen kann zwar durch eine Verwendung von auf einzelne Tierarten oder -gruppen angepassten bzw. angelernten Verhaltensmodellen gering gehalten werden, die allgemeine Anwendbarkeit der Datenlogger bei anderen Tierarten oder -gruppen ist dadurch jedoch eingeschränkt. Bei einer Kombination mehrerer solcher spezifischen Verhaltensmodelle für unterschiedliche Tierarten oder -gruppen wird wiederum der benötigte Rechen- und Speicheraufwand erhöht, was sich negativ auf die Energieeffizienz auswirkt. Nachteilig an den bisherigen Ansätzen ist somit eine mangelnde Zuverlässigkeit und/oder Flexibilität bei der Anwendung. Zudem werden von den Anwendern zumeist umfangreiche Programmierkenntnisse verlangt, was eine breite Anwendung beispielsweise im Bereich Naturschutz erschwert.

Beispielsweise offenbart die DE 10 2023 121 479 A1 eine zweiteilige Vorrichtung zur elektronischen Überwachung von und mit freilebenden Wildtieren wie Tauben und anderen Vogelarten mittels einer auf Methoden der künstlichen Intelligenz, KI, basierten Verhaltenserkennung, wobei der zweite Vorrichtungsteil eine Steuerung des ersten Vorrichtungsteils auf der Grundlage eines erkannten Verhaltens des Tieres vornehmen kann. Darin wird zwar das allgemeine Training eines entsprechenden neuronalen Netzes beschrieben, nicht jedoch, womit dieses Training erfolgen soll und in welcher Form das erstellte Verhaltensmodell letztlich auf die Vorrichtung übertragen wird. Bisher erfolgt gemäß Stand der Technik eine Bereitstellung von entsprechenden Verhaltensmodellen stets mittels einer hardwarenahen Programmierung unmittelbar in einer Betriebssoftware oder Firmware solcher Vorrichtungen, wobei das Training und das Einbinden des entsprechenden neuronalen Netzes in die Betriebssoftware oder Firmware im Allgemeinen nicht durch die Endanwender der Vorrichtungen selbst erfolgen kann, sondern durch erfahrene Programmierer oder unmittelbar durch den Anbieter der Vorrichtung vorgenommen werden muss. Ein wahlweises Ablegen der Verhaltensmodelle von außerhalb der Vorrichtung vor jeder Verwendung an einem anderen Tier oder mit anderen Sensoren und eine Anpassung des sensorspezifischen Verhaltensmodells unabhängig von einer Betriebssoftware oder Firmware der Vorrichtung sind somit bisher nicht möglich.

### Offenbarung der Erfindung

Es ist daher eine Aufgabe der vorliegenden Erfindung, eine verbesserte Vorrichtung zur automatischen Verhaltenserkennung besendeter Tiere ("Datenlogger") zur Verfügung zu stellen, welche die im Stand der Technik auftretenden Probleme vermeidet oder zumindest deutlich verringert.

Diese Aufgaben werden erfindungsgemäß durch die Merkmale der unabhängigen Patentansprüche gelöst. Zweckmäßige Ausgestaltungen der Erfindung sind in den jeweiligen Unteransprüchen enthalten.

Ein erster Aspekt der vorliegenden Erfindung betrifft eine Vorrichtung zur automatischen Verhaltenserkennung besendeter Tiere, umfassend einen Sensor zur Erfassung verhaltensspezifischer Sensordaten eines mit der Vorrichtung verbundenen Tieres; einen Prozessor zur Auswertung der vom Sensor erfassten verhaltensspezifischen Sensordaten innerhalb der Vorrichtung zur Ableitung eines den Sensordaten entsprechenden Verhaltens des Tiers auf Grundlage eines zugehörigen sensorspezifischen Verhaltensmodells; und einen Speicher, in dem das zugehörige sensorspezifische Verhaltensmodell gespeichert ist, wobei unterschiedliche sensorspezifische Verhaltensmodelle von außerhalb der Vorrichtung wahlweise im Speicher abgelegt werden können, wobei ein passend gewähltes Ausgangsmodell anhand von Trainingsdaten in einem externen Softwareprogramm angelernt werden und anschließend auf die Vorrichtung übertragen werden kann, wobei durch die wahlweise von außerhalb der Vorrichtung im Speicher ablegbaren Verhaltensmodelle vor jeder Verwendung an einem anderen Tier oder mit anderen Sensoren eine Anpassung des sensorspezifischen Verhaltensmodells unabhängig von einer Betriebssoftware oder Firmware der Vorrichtung erfolgen kann.

Unter verhaltensspezifischen Sensordaten werden dabei vom Sensor bereitgestellte Daten verstanden, aus welchen sich bestimmte Verhaltensweisen des Tieres ableiten lassen. Die Sensordaten müssen dabei nicht auf ein bestimmtes zu erkennendes Verhalten eingeschränkt sein, sondern können bevorzugt zumindest potentiell eine Vielzahl von unterschiedlichen Verhaltensweisen erkennen lassen. Vorzugsweise ist der Sensor zur Erfassung verhaltensspezifischer Sensordaten ein 3D-Beschleunigungssensor, noch bevorzugter ein 6D-Beschleunigungssensor, mit dem auch Drehbewegungen um orthogonale Achsen unmittelbar mit erfasst werden können. Dabei kann das entsprechende Verhalten auch bereits aus einer Dimension ableitbar sein, im Allgemeinen wird ein Verhalten jedoch besser durch eine kombinierte Auswertung aller verfügbaren Sensordaten erkannt. Bei dem Sensor kann es sich auch um eine Kombination von zwei oder mehreren verschiedenen Sensoren, u. a. Sensoren zur Erfassung von Drehraten, Magnetfeld, Luftdruck, Temperatur etc., handeln. Beispielsweise kann ein Temperatursensor zur Messung der Körpertemperatur (Ruhen) und/oder ein Pulsmesser zur Messung des Pulses des Tieres (Rennen) ebenfalls auf ein bestimmtes Verhalten (d. h. eine gerade durchgeführte Aktivität) hinweisen. Auch eine Kamera kann hierbei als entsprechender Sensor genutzt werden.

Der Prozessor zur Auswertung der vom Sensor erfassten verhaltensspezifischen Sensordaten ist innerhalb der Vorrichtung angeordnet und eingerichtet zur Ableitung eines den Sensordaten entsprechenden Verhaltens des Tiers auf Grundlage eines zugehörigen sensorspezifischen Verhaltensmodells. Wie genau diese Ableitung erfolgt, ist somit durch das jeweilige sensorspezifische Verhaltensmodell vorgegeben.

Insbesondere kann es sich bei dem sensorspezifischen Verhaltensmodell um ein regelbasiertes Modell zur entsprechenden regelbasierten Auswertung mittels des Prozessors handeln. Vorzugsweise handelt es sich bei dem sensorspezifischen Verhaltensmodell jedoch um ein maschinengelerntes Modell zur Auswertung mittels des Prozessors. Letzteres hat den Vorteil, dass nach einem entsprechenden Anlernprozess zur initialen Erstellung des verwendeten sensorspezifischen Verhaltensmodells eine Auswertung der vom Sensor erfassten verhaltensspezifischen Sensordaten innerhalb der Vorrichtung deutlich schneller, energieeffizienter und zuverlässiger als mit klassischen regelbasierten Modellen erfolgen kann. Möglich ist jedoch auch ein hybrider Ansatz, bei dem sowohl regelbasierte als auch maschinengelernte Komponenten in einem gemeinsamen sensorspezifischen Verhaltensmodell vorteilhaft miteinander kombiniert werden. Die Erstellung eines sensorspezifischen Verhaltensmodells kann somit dadurch erfolgen, dass ein passend gewähltes Ausgangsmodell mit Messdaten (z. B. 3D/6D-Beschleunigungsdaten) und zugehörigen Beobachtungsdaten "gefüttert" bzw. angelernt wird, welches dann auf möglichst einfache und unkomplizierte Weise auf eine erfindungsgemäße Vorrichtung übertragen werden kann.

Das sensorspezifische Verhaltensmodell stellt somit eine mehr oder weniger abstrakte Beschreibung darüber dar, wie sich bestimmte Verhaltensweisen, beispielsweise bei einer bestimmten Tierart bzw. -gruppe (z.B. Hundartige/Canide), über einen die verhaltensspezifischen Sensordaten bereitstellenden Sensor in den jeweiligen Sensordaten identifizieren lassen (das Verhaltensmodell ist spezifisch für die Art der vom Sensor bereitgestellten verhaltensspezifischen Sensordaten und muss nicht spezifisch für einen einzelnen, konkret vorliegenden Sensor erstellt sein). Das Modell kann jedoch auch spezifisch für ein einzelnes Tier bereitgestellt werden. Daher kann vor jeder Verwendung an einem anderen Tier oder mit anderen Sensoren eine Anpassung des sensorspezifischen Verhaltensmodells erforderlich sein. Der modulare Speicheransatz der vorliegenden Erfindung ermöglicht hierbei jedoch gerade eine besonders schnelle und flexible Anpassung.

Das sensorspezifische Verhaltensmodell selbst ist in einem Speicher der erfindungsgemäßen Vorrichtung abgelegt und soll von außerhalb der Vorrichtung wahlweise im Speicher abgelegt werden können. Dies stellt eine wesentliche Idee der vorliegenden Erfindung dar. Die Vorrichtung kann dadurch hinsichtlich der zum Einsatz kommenden sensorspezifischen Verhaltensmodelle flexibel und auf einfache Weise an die jeweilige Aufgabenstellung angepasst werden. Dabei wird mit bereits bekannten oder für diese Zwecke gewonnenen realen Beobachtungsdaten zunächst ein entsprechendes sensorspezifisches Verhaltensmodell erstellt bzw. angelernt (anhand von Trainingsdaten), überprüft und validiert, um es dann in den Speicher der erfindungsgemäßen Vorrichtung zur internen Weiterverwendung an weiteren Sensordaten abzuspeichern. Dabei soll das sensorspezifische Verhaltensmodell insbesondere als unabhängiges Paket oder Modul im Speicher der erfindungsgemäßen Vorrichtung wahlweise (d. h. anwendungsspezifisch austauschbar) abgelegt werden können.

Dadurch braucht die eigentliche Betriebssoftware bzw. Firmware der Vorrichtung nicht wie bisher jeweils neu angepasst werden, sondern es muss lediglich das jeweilige sensorspezifische Verhaltensmodell abgespeichert werden. Dies ermöglicht es insbesondere auch technisch weniger versierten Anwendern solche Vorrichtungen zu betreiben. Da das sensorspezifische Verhaltensmodell bei der vorliegenden Erfindung von der eigentlichen Betriebssoftware bzw. Firmware der Vorrichtung getrennt ist, braucht nur noch das jeweilige sensorspezifische Verhaltensmodell vom Anwender angepasst werden. Hierfür kann dem Anwender ein entsprechend vereinfachtes Softwareprogramm zur Modellerstellung bereitgestellt werden. Bisher erfolgt eine Modellerstellung zumeist über die Nutzung spezifischer Bibliotheken oder Module, was jedoch für einen Nutzer ohne Programmiererfahrung nicht ohne Weiteres möglich ist. Das externe Softwareprogramm kann hingegen über eine vollständig integrierte Benutzerführung, vorzugsweise über eine graphische Benutzerschnittstelle, zur automatischen Modellerstellung mit Hilfe von einfachen Eingaben (z. B. Daten, Parameter) des jeweiligen Benutzers eingerichtet sein, wobei der Benutzer dann auch ohne jegliche Programmiererfahrung in die Lage versetzt werden soll, entsprechende sensorspezifische Verhaltensmodelle für seine spezifische Anwendung an einer konkreten erfindungsgemäßen Vorrichtung erstellen zu können. Vorzugsweise erfolgt eine Übertragung der sensorspezifischen Verhaltensmodelle in den Speicher der Vorrichtung dann drahtlos über ein passend bereitgestelltes und anwenderfreundlich vereinfachtes Kommunikationsmodul.

Vorzugsweise umfasst die Vorrichtung weiterhin ein Mittel zur Positionsbestimmung, dazu eingerichtet, Positionsdaten auf Grundlage eines aus Sensordaten abgeleiteten Verhaltens aufzunehmen; und/oder eine Kamera, dazu eingerichtet, Bild- und/oder Videodaten auf Grundlage eines aus Sensordaten abgeleiteten Verhaltens aufzunehmen. Über das Mittel zur Positionsbestimmung kann die GPS-Position des Tieres verhaltensabhängig aufgenommen werden, beispielsweise um bestimmte Fress- oder Ruheplätze zu identifizieren. Bei der Kamera kann es sich insbesondere um eine besonders kompakte, leichte und unauffällige Mikrokamera handeln. Die Kamera kann insbesondere eine elektronische Video- und/oder Bildkamera sein. Diese kann dabei insbesondere für Aufnahmen im sichtbaren und/oder im infraroten Spektralbereich ausgebildet sein. Bevorzugt handelt es sich bei der Kamera um eine Multi- oder Hyperspektralkamera. Der Begriff "Kamera" steht hierbei allgemein für optische Sensorsysteme zur Erfassung von räumlichen Informationen aus der Umgebung des Sensorsystems, es kann sich somit auch um ein LiDAR-System o. ä. zur 3D-Umgebungsabtastung handeln. Dadurch, dass die Kamera beispielsweise nur in Reaktion auf ein bestimmtes, aus Sensordaten abgeleitetes Verhalten aktiviert werden kann, können beispielsweise gezielt Aufnahmen von der jeweiligen Nahrung bei Fressen oder einem Beutetier beim Jagen aufgenommen werden. Die Kamera kann somit besonders energiesparend betrieben werden.

Vorzugsweise umfasst die Vorrichtung weiterhin ein Mittel zur Energieversorgung, und ein Mittel zur drahtlosen Kommunikation. Bei einem Mittel zur Energieversorgung kann es sich insbesondere um eine Batterie oder einen aufladbaren Energiespeicher (Akku) mit oder ohne ein zugehöriges Batteriemanagementsystem (BMS) handeln. Insbesondere kann das Mittel zur Energieversorgung ein Modul zur Energieerzeugung und/oder -speicherung umfassen. Das Mittel zur Energieversorgung kann bevorzugt einen aufladbaren Energiespeicher und/oder eine Solarzelle umfassen. Die Solarzelle kann mit einem Akku als Energiespeicher verbunden sein.

Über ein Mittel zur drahtlosen Kommunikation kann beispielsweise eine Fernsteuerung und/oder Fernüberwachung der Vorrichtung erfolgen. Bei einem Mittel zur drahtlosen Kommunikation kann es sich beispielsweise um ein mobiles Datenmodem oder ein Modul zum Aufbau einer Mobilfunkverbindung, wie GSM, UMTS, HSDPA, oder LTE bzw. "2G", "3G", "4G", "5G", oder "6G" handeln. Zur Übertragung können dabei sowohl IP-basierte als auch auf Textnachrichten beruhende Protokollverfahren zum Einsatz kommen. Obwohl hierbei ein bidirektionales Kommunikationsverhalten bevorzugt ist, kann eine Kommunikation auch unidirektional, z. B. in Richtung auf eine Basisstation, erfolgen. Die unidirektionale Übertragung kann für einen besonders energiesparenden Betrieb beispielsweise zur zeit- oder ereignisbasierten Übermittlung einzelner Kamerabilder oder von Standortdaten genutzt werden. Insbesondere für den Feldeinsatz ist ein simples, auf dem Versand und Empfang von kurzen SMS-Nachrichten oder Datenpaketen (beispielsweise über das Iridium oder ein beliebiges anderes Satellitenkommunikationssystem als LPWAN/IoT-Pakete) beruhendes Kommunikationssystem besonders vorteilhaft.

Vorzugsweise erfolgt eine Übermittlung von mit einer erfindungsgemäßen Vorrichtung erfassten Überwachungsdaten an einen Empfänger drahtlos. Dies ist insbesondere dann von Vorteil, wenn ein Auslesen der Vorrichtung nicht unmittelbar möglich ist und ansonsten ein Wiedereinfang des überwachten Tieres notwendig wäre. Eine drahtlose Übertragung kann über eine Nahbereichs-Funkverbindung und/oder über eine Fernbereichs-Funkverbindung erfolgen.

Über das Mittel zur Kommunikation kann insbesondere auch der aktuelle Zustand der Vorrichtung einer Basisstation mitgeteilt werden. Hierzu können der Ladezustand eines aufladbaren Energiespeichers, die Größe der bisher gespeicherten Daten bzw. ein für weitere Daten verfügbare Restspeicherplatz, das Ergebnis einer Funktionsüberprüfung oder zur Fernüberwachung benötigte Informationen gehören.

Vorzugsweise umfasst das Mittel zur drahtlosen Kommunikation eine Antenne. Eine Antenne dient zur gerichteten Übermittlung elektromagnetischer Wellen für eine Datenübertragung. Die Antenne ist dabei bevorzugt derart angeordnet, dass abhängig von einer gewählten Befestigungsart am Tier stets ein optimaler Empfang gewährleistet werden kann.

Ein zweiter Aspekt der vorliegenden Erfindung betrifft ein System zur automatischen Verhaltenserkennung besendeter Tiere, umfassend eine erfindungsgemäße Vorrichtung zur Tierüberwachung, ein Kommunikationsmodul zur Übertragung der sensorspezifischen Verhaltensmodelle in den Speicher der Vorrichtung, und das externe Softwareprogramm zur Ausführung auf einem zweiten Prozessor (d. h. nicht dem Prozessor der Vorrichtung, sondern beispielsweise auf dem Prozessor eines externen Rechners), eingerichtet zum Erstellen der unterschiedlichen sensorspezifischen Verhaltensmodelle für die Vorrichtung durch einen Anwender der Vorrichtung.

Ein Anwender braucht dann bevorzugt lediglich eine Überprüfung, Optimierung und/oder Validierung des Modells und keinerlei direkte Programmierarbeit zu leisten. Dies kann insbesondere die Auswahl eines bestimmten Algorithmus, die Optimierung einzelner Parameter des zu erstellenden sensorspezifischen Verhaltensmodells und/oder die Bereinigung fehlerhafter Trainingsdaten betreffen. Anschließend kann das fertig erstellte sensorspezifische Verhaltensmodell auf das Kommunikationsmodul bzw. darüber zur erfindungsgemäßen Vorrichtung übertragen werden. Das ganze System ist dabei so konzipiert, dass verschiedene Arten von Modellen verarbeitet werden können.

Aus der Auswertung der Daten direkt in der erfindungsgemäßen Vorrichtung mittels austauschbarer sensorspezifischer Verhaltensmodelle ergeben sich mehrere Vorteile:
- Reduzierung der Datenmenge, die zu speichern und zu übertragen ist,
- universeller Einsatz der Vorrichtung, da die sensorspezifischen Verhaltensmodelle auf einfache und flexible Art und Weise verbessert, angepasst und/oder abgeändert werden können, ohne dass gleichzeitig die Betriebssoftware bzw. Firmware der Vorrichtung mit angepasst werden muss,

- Möglichkeit auf bestimmte Verhaltensweisen hin eine gezielte Steuerung der Datenaufnahme bei der Aktivierung eines Mittels zur Positionsbestimmung (z. B. GPS) und/oder einer Kamera, welche typischerweise die größten Energieverbraucher bei entsprechenden Vorrichtungen sind, vorzunehmen, sowie
- erweiterte Anwendungen durch die Möglichkeit, in Echtzeit auf ein erkanntes Verhalten zu reagieren und auch entsprechende (externe) Aktionen initiieren zu können.

Weitere bevorzugte Ausgestaltungen der Erfindung ergeben sich aus den in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

### Kurzbeschreibung der Zeichnungen

Die Erfindung wird nachfolgend in Ausführungsbeispielen anhand der zugehörigen Zeichnung erläutert. Es zeigt:
- Fig. 1: eine schematische Skizze zur Anwendung einer erfindungsgemäßen Vorrichtung zur Überwachung von Tieren,
- Fig. 2: eine schematische Darstellung eines Blockdiagramms einer Ausführungsform einer erfindungsgemäßen Vorrichtung, und
- Fig. 3: eine schematische Darstellung zum Erstellen eines sensorspezifischen Verhaltensmodells für eine erfindungsgemäße Vorrichtung am Beispiel eines 3D-Beschleunigungssensors.

### Ausführliche Beschreibung der Zeichnungen

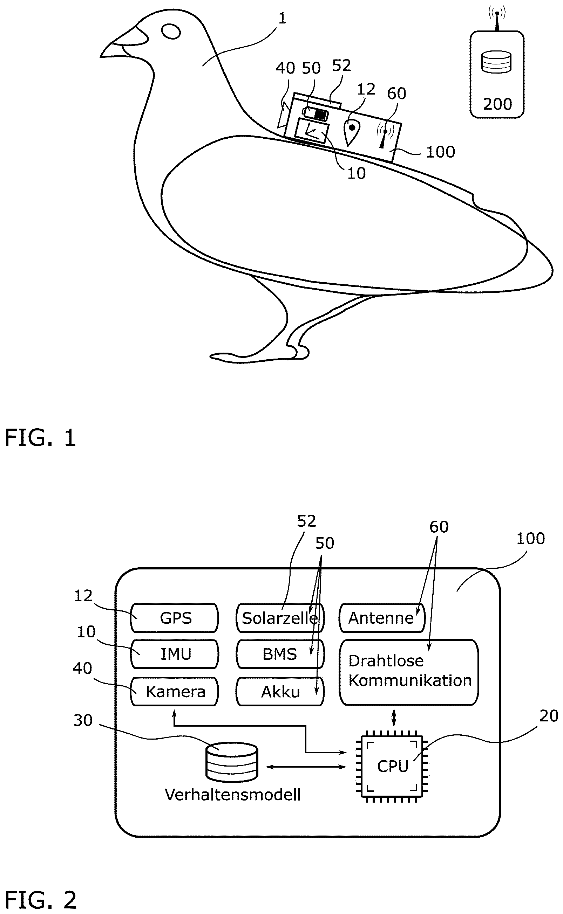

Figur 1 zeigt eine schematische Skizze zur Anwendung einer erfindungsgemäßen Vorrichtung 100 zur Überwachung von Tieren 1. Bei dem gezeigten Tier 1 soll es sich beispielhaft um einen Vogel, insbesondere um eine Taube handeln. Die erfindungsgemäße Vorrichtung 100 kann jedoch im Prinzip mit beliebigen Tieren 1 (auch Wassertiere bzw. sich zumindest zeitweise in Wasser aufhaltende Landtiere) verwendet werden Die gezeigte Vorrichtung 100 umfasst einen Sensor 10 zur Erfassung verhaltensspezifischer Sensordaten eines mit der Vorrichtung 100 verbundenen Tieres 1; einen Prozessor 20 (nicht gezeigt, siehe hierzu FIG. 2) zur Auswertung der vom Sensor 10 erfassten verhaltensspezifischen Sensordaten innerhalb der Vorrichtung 100 zur Ableitung eines den Sensordaten entsprechenden Verhaltens des Tiers 1 auf Grundlage eines zugehörigen sensorspezifischen Verhaltensmodells; und einen Speicher 30 (nicht gezeigt, siehe hierzu FIG. 2) in dem das zugehörige sensorspezifische Verhaltensmodell gespeichert ist, wobei unterschiedliche sensorspezifische Verhaltensmodelle von außerhalb der Vorrichtung wahlweise im Speicher 30 abgelegt werden können. Bei dem Sensor 10 zur Erfassung verhaltensspezifischer Sensordaten kann es sich insbesondere um ein 3D/6D-Beschleunigungssensor handeln.

Die gezeigte Vorrichtung umfasst weiterhin vorzugsweise ein Mittel zur Positionsbestimmung 12, dazu eingerichtet, Positionsdaten auf Grundlage eines aus Sensordaten abgeleiteten Verhaltens aufzunehmen; und/oder eine Kamera 40, dazu eingerichtet, Bild- und/oder Videodaten auf Grundlage eines aus Sensordaten abgeleiteten Verhaltens aufzunehmen. Die auslösenden Sensordaten müssen dabei nicht vom zur Verhaltenserfassung verwendeten Sensor 10 stammen. Die gezeigte erfindungsgemäße Vorrichtung 100 kann weiterhin ein Mittel zur Energieversorgung 50 und ein Mittel zur drahtlosen Kommunikation 60 umfassen, wobei das Mittel zur Energieversorgung 50 einen aufladbaren Energiespeicher und eine Solarzelle 52 umfassen kann. Dadurch kann auch bei langen Überwachungszeiträumen ein durchgehender Betrieb der Vorrichtung durch zwischenzeitliches Aufladen der Energieversorgung 50 sichergestellt werden. Über das Mittel zur drahtlosen Kommunikation 60 kann eine Übermittlung von mit der Vorrichtung 100 erfassten Überwachungsdaten an einen Empfänger auch über längere Strecken hinweg erfolgen. Über eine Mobilfunkverbindung kann damit beispielsweise das Verhalten von Vögeln oder anderen Tieren in freier Wildbahn überwacht und beobachtet werden. Vorzugsweise umfasst das Mittel zur drahtlosen Kommunikation 60 eine Antenne. Eine Übertragung der sensorspezifischen Verhaltensmodelle in die Vorrichtung 100 kann insbesondere drahtlos über ein Kommunikationsmodul 200 erfolgen.

Figur 2 zeigt eine schematische Darstellung eines Blockdiagramms einer Ausführungsform einer erfindungsgemäßen Vorrichtung 100. Der prinzipielle Aufbau der gezeigten Vorrichtung 100 entspricht im Wesentlichen dem in FIG. 1 gezeigten Aufbau, daher gelten die Bezugszeichen und deren jeweilige Zuordnung zu den einzelnen Merkmalen der vorliegenden Erfindung entsprechend. Bei dem gezeigten Sensor 10 zur Erfassung verhaltensspezifischer Sensordaten kann es sich insbesondere um einen 3D/6D-Beschleunigungssensor (beispielsweise in Form einer sog. Inertial Measurement Unit, IMU) handeln. Bei dem gezeigten Mittel zur Positionsbestimmung 12 kann es sich um ein GPS- bzw. GNSS-Modul handeln. Die von diesen Sensoren sowie von der Kamera 40 bereitgestellten Sensordaten können über eine oder mehrere Datenleitungen zum Prozessor 20 für eine entsprechende Verarbeitung gesendet werden. Über den Prozessor 20 können diese Sensoren vorzugsweise auch gesteuert werden, so dass beispielsweise eine Positionsbestimmung durch das Mittel zur Positionsbestimmung 12 nur unter bestimmten Bedingungen erfolgt und nicht kontinuierlich erfolgen muss. Entsprechend kann auch das Mittel zur drahtlosen Kommunikation 60 über eine solche bidirektionale Datenverbindung mit dem Prozessor 20 verbunden sein. Ebenfalls gezeigt ist der Speicher 30, in dem das sensorspezifische Verhaltensmodell gespeichert werden kann, welches vom Prozessor 20 zur Auswertung der vom Sensor 10 erfassten verhaltensspezifischen Sensordaten innerhalb der Vorrichtung 100 genutzt wird. Der Speicher 30 kann jedoch zusätzlich auch zum Abspeichern des daraus jeweils abgeleitete Verhaltens des Tieres 1 (z. B. welche spezifische Aktivität des Tieres jeweils in den Sensordaten identifiziert wurde) für einen späteren Abruf genutzt werden. Insofern ist auch hierbei die gezeigte Datenverbindung beispielhaft bidirektional angegeben. Die Energieversorgung 50 kann zusätzlich zur FIG. 1 ein optionales Batteriemanagementsystem (BMS) umfassen.

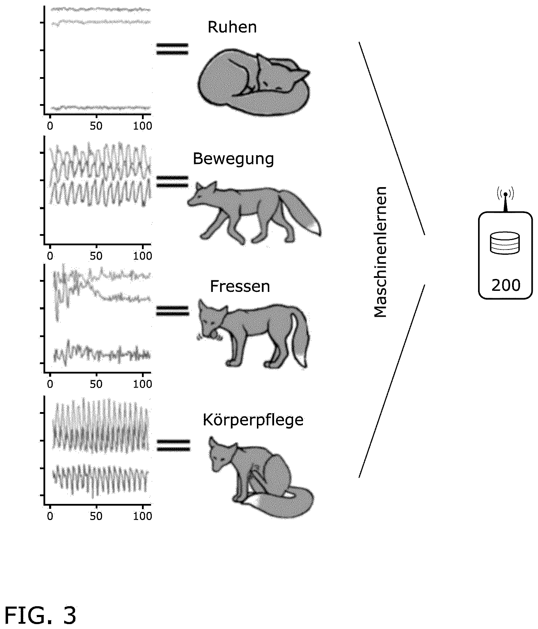

Figur 3 zeigt eine schematische Darstellung zum Erstellen eines sensorspezifischen Verhaltensmodells für eine erfindungsgemäße Vorrichtung 100 am Beispiel eines 3D-Beschleunigungssensors. Bei dem die erfindungsgemäße Vorrichtung 100 tragenden Tier 1 soll es sich um einen Fuchs handeln. Der 3D-Beschleunigungssensors könnte dabei insbesondere an einem Halsband des Fuchses befestigt sein. Die Kurven in der linken Hälfte geben beispielhaft die zeitlichen Verläufe der einzelnen Beschleunigungswerte in den drei räumlichen Achsen wieder. Beim Ruhen ("Resting") des Fuchses sind auch die zugehörigen Beschleunigungswerte weitestgehend in Ruhe und weisen höchsten kleinere Fluktuationen (z. B. aufgrund von Atembewegungen) auf. Befindet sich der Fuchs in Bewegung ("Locomotion"), ist eine deutliche Oszillation in allen drei Achsen zu erkennen. Die Schwingungen geben hierbei die Bewegung des Körpers beim Laufen oder Rennen wieder. Wie in dem dritten Diagramm klar zu erkennen ist, zeigt auch das Fressen ("Feeding") ein relativ eindeutiges Beschleunigungsmuster in den drei Achsen. In diesem Beispiel könnte der Fuchs beispielsweise seinen Kopf weitgehend in gleicher Höhe gehalten haben, während die Kaubewegungen zu stark variierenden Beschleunigungswerten in der senkrechten Ebene führten. Schließlich zeigt auch die Körperpflege ("Grooming") ein relativ markantes, von den anderen Profilen deutlich unterscheidbares Beschleunigungsprofil mit oszillierenden Bewegungen in allen drei Achsen.

Die Erkennung und Zuordnung von Sensordaten (in diesem Beispiel Beschleunigungsdaten) zu bestimmten Verhaltensweisen ist sowohl mit klassischen Mitteln der maschinellen Mustererkennung als auch mit neueren Methoden des maschinellen Lernens möglich. Entsprechend kann es sich bei einem abgeleiteten sensorspezifischen Verhaltensmodell um ein regelbasiertes Modell zur entsprechenden regelbasierten Auswertung oder um ein maschinengelerntes Modell zur Auswertung mittels des Prozessors handeln, wobei die Erstellung eines sensorspezifischen Verhaltensmodells mit Hilfe des maschinellen Lernens üblicherweise zu bevorzugen. Möglich ist jedoch auch ein hybrider Ansatz, bei dem sowohl regelbasierte als auch maschinengelernte Komponenten in einem gemeinsamen sensorspezifischen Verhaltensmodell vorteilhaft miteinander kombiniert werden. Das aus den Trainingsdaten abgeleitete sensorspezifische Verhaltensmodell für das jeweilige Tier oder die jeweilige Tierart bzw. -gruppe kann anschließend an das Kommunikationsmodul 200 übertragen werden, so dass darüber dann ein Ablegen im Speicher einer erfindungsgemäßen Vorrichtung erfolgen kann.

Bei dem sensorspezifischen Verhaltensmodell kann es sich insbesondere um ein trainiertes neuronales Netz handeln, wobei insbesondere ein Beschleunigungssensorsignal (3D/6D) Informationen über Richtung und/oder Intensität einer Bewegung die Eingangsdaten für das neuronale Netz liefern kann. Beispielsweise kann die Struktur des neuronalen Netzes einen analytischen Algorithmus, umfassen. Das Training kann vorzugsweise mittels eines Supervised-Learning-Algorithmus mit vorab gesammelten Trainingsdaten erfolgen. Bevorzugt ist eine Quantisierung der trainierten Gewichte bei der Erkennung.

### Bezugszeichenliste

- 1: Tier (z. B. Fuchs, Wolf, Taube)
- 10: Sensor (z. B. 3D/6D-Beschleunigungssensor)
- 12: Mittel zur Positionsbestimmung
- 20: Prozessor (z. B. FPGA, Mikroprozessor, KI-Chip)
- 30: Speicher (z. B. Flashspeicher)
- 40: Kamera
- 50: Energieversorgung
- 52: Solarzelle
- 60: Mittel zur drahtlosen Kommunikation
- 100: Vorrichtung zur automatischen Verhaltenserkennung besendeter Tiere
- 200: Kommunikationsmodul

## Patentansprüche

1. Vorrichtung (100) zur automatischen Verhaltenserkennung besendeter Tiere, umfassend:
einen Sensor (10) zur Erfassung verhaltensspezifischer Sensordaten eines mit der Vorrichtung (100) verbundenen Tieres (1);
einen Prozessor (20) zur Auswertung der vom Sensor (10) erfassten verhaltensspezifischen Sensordaten innerhalb der Vorrichtung (100) zur Ableitung eines den Sensordaten entsprechenden Verhaltens des Tiers (1) auf Grundlage eines zugehörigen sensorspezifischen Verhaltensmodells; und
einen Speicher (30), in dem das zugehörige sensorspezifische Verhaltensmodell gespeichert ist,
**dadurch gekennzeichnet, dass**
unterschiedliche sensorspezifische Verhaltensmodelle von außerhalb der Vorrichtung (100) wahlweise im Speicher (30) abgelegt werden können, wobei ein passend gewähltes Ausgangsmodell anhand von Trainingsdaten in einem externen Softwareprogramm angelernt werden und anschließend auf die Vorrichtung (100) übertragen werden kann, wobei durch die wahlweise von außerhalb der Vorrichtung (100) im Speicher (30) ablegbaren Verhaltensmodelle vor jeder Verwendung an einem anderen Tier (1) oder mit anderen Sensoren (10) eine Anpassung des sensorspezifischen Verhaltensmodells unabhängig von einer Betriebssoftware oder Firmware der Vorrichtung (100) erfolgen kann.

2. Vorrichtung (100) nach Anspruch 1, wobei der Sensor (10) zur Erfassung verhaltensspezifischer Sensordaten ein Beschleunigungssensor ist.

3. Vorrichtung (100) nach Anspruch 1 oder 2, wobei die Vorrichtung weiterhin umfasst:
ein Mittel zur Positionsbestimmung (12), dazu eingerichtet, Positionsdaten auf Grundlage eines aus Sensordaten abgeleiteten Verhaltens aufzunehmen; und/oder
eine Kamera (40) umfasst, dazu eingerichtet, Bild- und/oder Videodaten auf Grundlage eines aus Sensordaten abgeleiteten Verhaltens aufzunehmen.

4. Vorrichtung (100) nach einem der vorhergehenden Ansprüche, weiterhin umfassend:
ein Mittel zur Energieversorgung (50); und
ein Mittel zur drahtlosen Kommunikation (60).

5. Vorrichtung (100) nach Anspruch 4, wobei das Mittel zur Energieversorgung (50) einen aufladbaren Energiespeicher und/oder eine Solarzelle (52) umfasst.

6. Vorrichtung (100) nach Anspruch 4 oder 5, wobei das Mittel zur drahtlosen Kommunikation (60) eine Antenne umfasst.

7. Vorrichtung (100) nach einem der vorhergehenden Ansprüche, wobei es sich bei dem sensorspezifischen Verhaltensmodell um ein regelbasiertes Modell zur regelbasierten Auswertung mittels des Prozessors (20) handelt.

8. Vorrichtung (100) nach einem der vorhergehenden Ansprüche, wobei es sich bei dem sensorspezifischen Verhaltensmodell um ein maschinengelerntes Modell zur auf Methoden der künstlichen Intelligenz, KI, basierten Auswertung mittels des Prozessors (20) handelt.

9. Vorrichtung (100) nach einem der vorhergehenden Ansprüche, wobei eine Übertragung der sensorspezifische Verhaltensmodelle in den Speicher (30) der Vorrichtung (100) drahtlos über ein Kommunikationsmodul (200) erfolgt.

10. System zur automatischen Verhaltenserkennung besendeter Tiere, umfassend:
eine Vorrichtung (100) nach einer der vorhergehenden Ansprüche;
ein Kommunikationsmodul (200) zur Übertragung der sensorspezifischen Verhaltensmodelle in den Speicher (30) der Vorrichtung (100); und
das externe Softwareprogramm zur Ausführung auf einem zweiten Prozessor, eingerichtet zum Erstellen der unterschiedlichen sensorspezifischen Verhaltensmodelle für die Vorrichtung (100) durch einen Anwender der Vorrichtung (100).
